# EUROPEAN PATENT APPLICATION

(11) **EP 3 795 450 A1**
(43) Date of publication of application: **24.03.2021**
(21) Application number: 19380024.0
(22) Date of filing: 23.09.2019
(51) Int. Cl.: B61L 15/00, B61L 27/00, G06Q 10/00, G06Q 50/30

(54) **SYSTEM AND METHOD FOR EFFICIENT MANAGEMENT OF GUIDED VEHICLE MAINTENANCE**

(71) Applicant: Siemens Rail Automation S.A.U., 28760 Tres Cantos (Madrid) (ES)
(72) Inventor: Saiz Muñoz, Maria, E- 28100 Alcobendas (Madrid) (ES); Anton Viaña, Monica, E-28010 Madrid (ES); Ortiz Navarro, José Luis, E-28028 Madrid (ES); Parshotam Lalwani, Dinesh, E-28020 Madrid (ES); Colina Marin, Arturo, 28012 Madrid (ES)
(74) Representative: Deffner, Rolf

(57) **Abstract**

The present invention concerns a method and a system for automatically managing a maintenance operation of an electrical guided vehicle (10), the system comprising an on-board device (11) configured for determining in real time a current energy cost of electrical energy provided to the guided vehicle (10) and automatically determining, in function of said current energy cost, a time T at which a maintenance operation of the guided vehicle (10) has to take place for minimizing an energy cost of said maintenance operation, wherein said determination of the time T is configured for automatically triggering a sending by the on-board device (11) of a request for the maintenance operation of the guided vehicle (10) to a remote control center (12).

## Description

The present invention concerns a system and method for improving the maintenance of guided vehicles.

The present invention is essentially related to the maintenance of guided vehicles, wherein the expression "guided vehicle" refers to public transport means such as subways, trains or train subunits, etc., as well as load transporting means such as, for example, freight trains, for which safety is a very important factor and which are guided along a route or railway by at least one rail, in particular by two rails. More specifically, the present invention falls within the field of cost and energy savings with respect to the maintenance of such vehicles, notably in connection with the planning of maintenance services.

Indeed, a problematic with respect to complex railway infrastructures involving different guided vehicles having each a specific schedule is to efficiently plan maintenance activities such as washing, cleaning, etc. Existing solutions are based on a computing device configured for scheduling maintenance activities in function of predefined operation hours of the guided vehicles. Unfortunately, such solutions are not flexible and not adapted to variable operation hours.

An objective of the present invention is to propose a low cost, universal, and flexible solution to enable a cost-efficient maintenance of guided vehicles.

For achieving said objective, the present invention proposes notably a system and method for automatically managing the maintenance of guided vehicles as disclosed by the objects of independent claims. Other advantages of the invention are presented in the dependent claims.

It is known that different tariffs may apply to electricity price, the latter depending on the electricity demand. The present invention proposes to use an on-board device, e.g. a smart energy cost reduction artificial intelligence device (hereafter SECRAID) installed on board a guided vehicle, wherein said on-board device is configured for determining electrical energy cost patterns in real time and automatically triggering a sending of a request for a maintenance operation (i.e. a request for an authorization of carrying out the maintenance operation), notably in function of previously determined cost patterns, wherein said request is configured for triggering within a remote control center receiving said request a determination whether the request can be approved or not.

In particular, the system according to the invention comprises said on-board device configured for determining in real time a current energy cost (electrical energy cost) of the electrical energy provided to the guided vehicle in operation on a railway network, said on-board device being further configured for automatically determining, in function of said current energy cost, a time T at which a maintenance operation of the guided vehicle has to take place for minimizing an energy cost of said maintenance operation, wherein said determination of the time T is configured for automatically triggering a sending by the on-board device of a request for maintenance of the guided vehicle to a remote control center, the latter responding by sending as response either a confirmation of the maintenance operation, or a refusal of carrying out such a maintenance operation. Optionally, the on-board device might be further configured for automatically controlling a displacement of the guided vehicle until a maintenance area in case of reception from the control center of a confirmation comprising a time slot and a movement authorization.

The on-board device according to the invention is configured for cooperating with said control center which might be optionally also part of the present invention. The remote control center is remotely located with respect to the guided vehicle that is equipped with the on-board device. Said control center according to the invention is configured for receiving the request for maintenance of one or several on-board devices, preferentially of the on-board device of each guided vehicle on a railway network, and for determining notably in function of said time T, and optionally of
- the position of the guided vehicle comprising the on-board device having sent the request, and/or
- a position of other guided vehicles, and/or
- a number of guided vehicles currently in operation on railway network, and/or
- a scheduled operation of the guided vehicle and optionally of any other guided vehicle, and/or
- a distance to maintenance base,
whether a time slot for the maintenance operation exists and is free of a conflict with another operation on the railway network. In other words, the remote control center is configured for determining if a time slot satisfying some conditions exists, wherein said conditions ensure that there will be no conflict with an operation of the railway network if the maintenance operation is carried out during said time slot. For instance, in order to determine whether there is a conflict or not, the remote control center is configured for determining whether a time slot exists for which at least one condition (or requirement) or a set of the following conditions/requirements (which are for instance predefined or preselected in a memory of the remote control center, e.g. in function of the type of guided vehicle) are valid or satisfied:
- the number of guided vehicles present on the railway network during the time slot is able to satisfy a demand or is equal to a predefined number;
- no operation of the guided vehicle is defined/planned during said time slot;
- the guided vehicle is within a predefined distance of a maintenance base;
- a maintenance base is available for said maintenance operation;
- in case of receiving a request for maintenance operation of another guided vehicle, a weight of the request for maintenance operation of the guided vehicle is higher than a weight of the request for maintenance operation of said another guided vehicle. In this case, the remote control center is preferentially configured for determining a weight for each request for a maintenance operation, wherein said weight is defined for instance in function of a ranking of the guided vehicles (i.e. some guided vehicles may have a higher ranking than other guided vehicles which makes the request for the maintenance operation of such higher ranking guided vehicle having priority over the request for maintenance operation of guided vehicle having a lower ranking), a distance to the maintenance base, etc., so that the advantage and disadvantage of accepting one request compared to the other is weighted, and only the higher weight may obtain a confirmation of the request.

If said condition or all conditions of said set of conditions are satisfied, then the on-board device sends a confirmation of the maintenance operation, otherwise, it sends a refusal. In particular, if such time slot exists, then it sends to the on-board device a confirmation of the maintenance operation, and optionally determines a movement authorization for enabling a displacement of the guided vehicle until a maintenance area configured for performing said maintenance operation. If such a time slot does not exist (i.e. it is not possible to avoid a conflict on the railway network if the maintenance operation would take place), then the control center is configured for sending a refusal of the maintenance operation. Preferentially, the confirmation comprises said time slot and optionally said movement authorization, or a refusal of the maintenance operation. Preferably, in case of sending a confirmation of the maintenance operation, then the control center or an on-board train control system is configured for controlling the displacement of the guided vehicle to the maintenance base/area.

The on-board device and the control center according to the invention typically comprise each a memory, a processor, communication means (e.g. wireless communication means) for exchanging messages, wherein a message may comprise for instance the request, or the time slot and the movement authorization depending on its sender.

The present invention also concerns a method for managing a maintenance of a guided vehicle, e.g. the scheduling of the maintenance, the method comprising the following steps:
- determining in real time, by means of an on-board device of the guided vehicle, a current energy cost of the electrical energy used by, or provided to, the guided vehicle for its operation on a railway network;
- automatically determining, by means of said on-board device and in function of said current energy cost, a time T at which a maintenance operation of the guided vehicle has to take place in order to minimize an energy cost of said maintenance operation, wherein said determination of the time T is configured for automatically triggering a sending by the on-board device of a request for the maintenance operation of the guided vehicle;
- receiving, by means of a remote control center, the request for the maintenance operation;
- determining, by means of said remote control center, whether the requested maintenance operation can be authorized or not. For this purpose, the control center is notably configured for determining whether a time slot for carrying out the maintenance operation at said time T is allowed, i.e. is free of conflict, with respect to operations, e.g. of other guided vehicles, taking place on the railway network at said time T. If such a time slot exists, then it approves the scheduled maintenance operation and sends a confirmation of the maintenance operation which comprises said time slot and optionally a movement authorization for enabling a displacement of the guided vehicle until a maintenance area configured for performing said maintenance operation;
- sending, by means of the control center and to the on-board device, either a confirmation or a refusal of the maintenance operation, wherein the confirmation comprises said time slot and optionally the movement authorization.

Further aspects of the present invention will be better understood through the following drawings, wherein like numerals are used for like and corresponding parts:
- Figure 1: schematic representation of a system according to the invention.
- Figure 2: flowchart of a preferred method according to the invention.

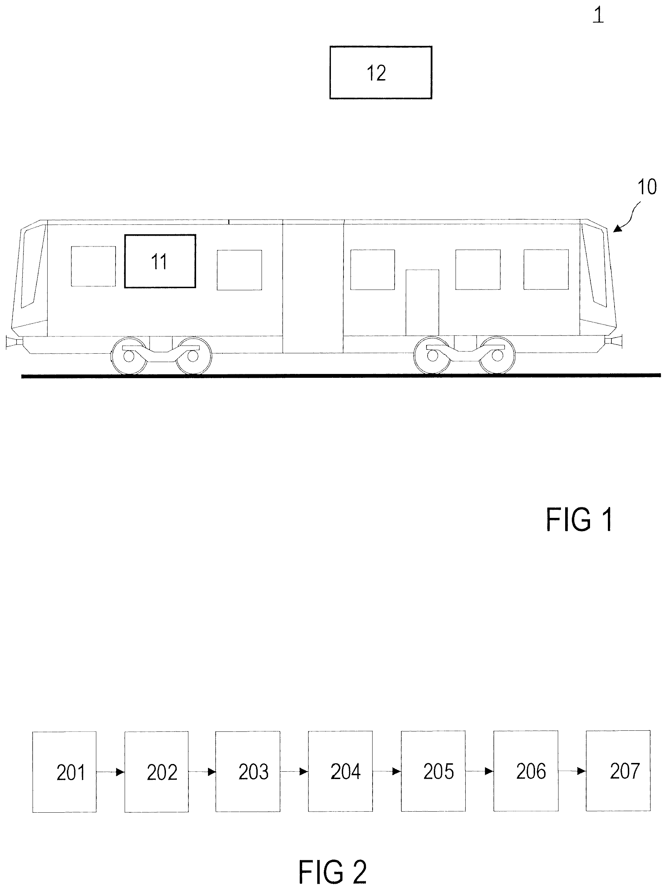

Figure 1 illustrates a preferred embodiment of a system 1 for managing, e.g. planning, a maintenance operation of a guided vehicle 10 according to the invention. Said system 1 comprises at least an on-board device 11 and optionally a remote control center 12. The on-board device 11 and the remote control center 12 may comprise a memory, a processor, and communication means configured for enabling the remote control center 12 and the on-board device 11 to communicate with each other or a connection to such communication means. For instance, the on-board device 11 may comprise an application-specific integrated circuit (ASIC) (i.e. GPU), a flash memory, and an Ethernet controller, and/or a 5G interface.

Figure 2 illustrates a preferred embodiment of the method according to the invention in the form of a flowchart, wherein:

At step 201, the on-board device 11 automatically determines in real time a current energy cost of the electrical energy that is supplied to the guided vehicle for its operation on a railway network, e.g. by overhead lines. For instance, the on-board device might be able to read a data encoded in a modulated carrier signal fed onto the conductor or wiring system used for powering the guided vehicle and for instance provided by the energy provider of the railway network, wherein said data encodes a real-time price of the electrical energy delivered to the guided vehicle. Otherwise said, the on-board device 11 may use the Power-Line Communication (PLC) technology for automatically acquiring the real-time price of the energy delivered to the guided vehicle 10. Preferably, the current energy cost might also be determined by the on-board device 11 from real time price data provided for instance by an external provider, using for instance an application programming interface (API), e.g. using a neutral energy data provider platform such as the API of Red Electrica De España (REE), or Pylon network (https://pylon-network.org), etc. The on-board device 11 according to the invention is therefore capable of determining the current energy cost in real time from data acquired from a provider. Additionally and preferably, the on-board device 11 may comprise a memory listing different maintenance operations for the guided vehicle, storing for each of said maintenance operations one or several requirements (e.g. a time period at which the maintenance operation should be renewed/repeated), and optionally the date at which one or all of said different maintenance operations took place for the last time. The on-board device might in particular be configured for determining which maintenance operation has to be performed for the guided vehicle, according for instance to a predefined maintenance plan defining for instance for each maintenance operation, like a washing, a period of time after which said maintenance operation has to be carried out or renewed. Optionally or additionally, the on-board device 11 might receive a signal indicating that a maintenance operation has to be carried out, or might determine that a specific maintenance operation has to be carried out from data collected from the guided vehicle. According to the present invention, the on-board device is then able to determine the best moment for carrying out said maintenance operation in order to minimize the costs of the energy required for carrying out said maintenance operation.

At step 202, the on-board device automatically determines in function of said current energy cost, a time T at which a maintenance operation of the guided vehicle has to take place in order to minimize an energy cost of said maintenance operation. In order to determine said time T, the on-board device may also take into account, in addition of said current energy cost, a requirement of the maintenance operation, e.g. a predefined period defining the length of time that separates the maintenance operation from the next one, defining therefore the periodical renewal of a maintenance operation. Other requirements might also be taken into account, wherein said requirements might be provided to the on-board device by a maintenance operator. The current energy cost and optionally said requirement(s) are therefore used as inputs within the on-board device 11 for determining the most appropriate time at which said maintenance must take place to keep the energy costs of said maintenance operation as low as possible. From said inputs, e.g. from a current energy cost and train washing operator requirements, the on-board device 11 is thus able to predict the appropriate time to carry out a washing that minimizes energy costs. Preferentially, the on-board device 11 uses Artificial Intelligence (AI) to determine an energy cost pattern from said current energy cost acquired in function of the time, wherein the determined energy cost pattern is then used for determining said time T. Preferentially, the on-board device 11 comprise a scheduling/planning algorithm that is configured for using both real-time (i.e. current) energy costs and pre-existing data for determining the energy cost pattern and from the latter said time T. The pre-existing data might comprise previously determined energy cost patterns, and/or previously acquired energy cost values in function of the time. For instance, the ASIC of the on-board device 11 might receive as inputs train washing operator requirements and the real-time (live) energy cost of electricity. The ASIC may comprise a pre-built AI model, i.e. said planning algorithm, that will output said time T from processing said AI model with the received inputs. Preferentially, the AI model is obtained by training a pre-configured model with the pre-existing data. Typically, the on-board device is capable of predicting an energy cost pattern from the real time energy costs (received in function of the time), determining within said energy cost pattern the time T from which the energy cost calculated for a predefined time period (within said energy cost pattern) starting at said time T and corresponding to the amount of time required for carrying out the maintenance operation will be the minimum.

At step 203, the determination of the time T by the on-board device 11 is configured for automatically triggering a sending by said on-board device of a request for a maintenance operation of the guided vehicle. Said request comprises preferentially said time T indicating at which time the maintenance operation has preferentially to start in order to minimize the energy costs of said maintenance operation. According to the present invention, the sending of said request is therefore automatically triggered by the calculation/determination by the on-board device of said time T which will be the most appropriate for realizing a maintenance operation of the guided vehicle that minimizes the energy costs of said maintenance operation.

According to the present invention, said time T is preferentially automatically determined by the on-board device in function of said current energy cost and optionally of guided vehicle maintenance requirements (e.g. maintenance systems that are going to be used, like a washing system, etc.), and optionally pre-existing data. Said time T might indicate a starting time for the maintenance operation so that energy costs for said maintenance operation reaches a minimum value or a value falling within a set of predefined minimum values. The on-board device may comprise a memory for storing at least one energy cost threshold, wherein said energy cost threshold might be predefined in said memory and/or automatically determined/predefined by said on-board device from an energy cost pattern. For instance, the energy cost threshold is automatically determined by the on-board device as an energy cost value that is a function of the minimum cost value of the energy cost pattern, or it can be an energy cost value that falls within a range of energy cost values around said minimum cost value of the energy cost pattern, or it can be the minimum energy cost value itself, or the latter to which a value corresponding to a percentage of the difference (within said energy cost pattern) between the maximum cost value and the minimum cost value is added).

At step 204, the remote control center 12 receives the request for the maintenance operation.

At step 205, and preferentially, the remote control center 12 automatically determines whether the requested maintenance operation can be approved or not. For this purpose, it automatically determines whether a time slot for the requested maintenance operation can be determined in function of said time T without creating (i.e. free of) a conflict with another operation on the railway network to which the guided vehicle having sent the request belongs to. Preferentially, the remote control center additionally determines whether a movement authorization might be provided to the guided vehicle having sent the request. The movement authorization is configured for authorizing the guided vehicle to move from a current position to the place wherein the maintenance operation will take place. In particular, said time slot and/or said movement authorization are determined in function of the received time T and optionally of one or several of the following features:
- a current guided vehicle position of the guided vehicle having sent the request;
- a current position of at least another guided vehicle moving on the same railway network as the guided vehicle having sent the request;
- the requested maintenance operation;
- a distance to a maintenance base wherein said maintenance operation has to take place;
- operational guided vehicles that remain on the railway network.

As already explained, the remote control center may determine whether the time slot satisfies all conditions of a set of conditions which are for instance predefined in a memory of the remote control center. For this purpose, it can automatically launch a process, wherein it determines a first set of time slots that all satisfy one of the conditions of the set of conditions, and it determines which time slots of this first set also satisfy another condition of the set of conditions. All time slots satisfying said another condition forming a second set. It continues with the second set by determining which time slots of the second set satisfy a third one of said conditions of the set of conditions, forming then a third set of time slots with the time slots satisfying said third one condition. It continues like this, determining at each round the set of time slots that satisfy a new one of the conditions of the set of conditions until all conditions have been checked. Once all conditions of the set of conditions have been checked, a final set of time slots is obtained which will comprise only time slots satisfying all conditions of the set of conditions or might be an empty set. If such a final set comprises one or several time slots, then the time slot which is temporally the closest to the time of reception the request by the remote control center might be sent to the on-board device with said confirmation. If said final set is empty, i.e. it does not comprise any time slot satisfying all conditions, then a refusal is sent.

According to the present invention, if no time slot that is free of conflict between the guided vehicle and another operation on the railway network can be determined by the on-board device, then a refusal of the maintenance operation is sent by the control center to the on-board device. Also, and preferentially, if a time slot free of conflict exists, then the remote control center is configured for issuing a positive movement authorization, and if no time slot free of conflict exist, then the control center is configured for issuing a negative movement authorization. If the movement authorization is positive, then the guided vehicle is authorized to move from its current position to said place wherein the maintenance operation has to take place, and if negative, then the guided vehicle is not authorized to move to said place wherein the maintenance operation has to take place. The decision whether the guided vehicle is authorized or not to move to the place is therefore taken by the remote control center while taking into account general working conditions of the railway network wherein said guided vehicle is moving.

At step 206, the control center 12 sends a response to the request for the maintenance operation. In case of approval of said request, then the control center 12 preferentially sends a confirmation to the on-board device, wherein said confirmation comprises said time slot and optionally the movement authorization to the on-board device. In case of refusal of the request, the control center 12 preferentially sends a message configured for informing the on-board device about a refusal of its request for the maintenance operation. For instance, said message might automatically trigger a cancellation by the on-board device of the planning of the maintenance operation at said time T, and optionally the determination of a new time T.

At step 207, the on-board device 11 receives the response of the remote control center 12. The on-board device is preferentially configured for automatically storing the response of the remote control center and the input data that resulted in said triggering of the sending by the on-board device of the request for a maintenance operation. The input data as well as the response of the remote control center are used by the on-board device 11 for training its planning algorithm. In this manner, the AI model/planning algorithm will be continuously monitored and deployed to optimize its predictions according to the guided vehicle working environment. If the response of the remote control center comprises the time slot and/or a movement authorization, then the on-board device is preferentially configured for automatically controlling a displacement of the guided vehicle to a maintenance area configured for carrying out said maintenance operation during the provided time slot. If the response comprises a refusal of the request, then the on-board device preferentially determines the next time T at which said maintenance operation could be carried out while minimizing its energy costs and continues a step 203, repeating therefore steps 203-207 for said next time T.

To summarize, the present invention proposes to install in a guided vehicle an on-board device 11 that is capable of determining for a guided vehicle electrical energy cost patterns in real time, said energy cost pattern being used for determining in function of a current cost (electrical live cost) of the energy used by the guided vehicle and optionally of maintenance operation operator requirements an appropriate time T to carry out a guided vehicle maintenance operation that minimizes the energy costs that will be required for carrying out said maintenance operation. Preferentially, the on-board device uses AI for determining said time T, wherein a planning algorithm is trained on previously determined cost patterns and optionally previous responses of the control center for optimizing the determination of said time T.

In other words, the on-board device according to the invention is capable of automatically scheduling a maintenance operation. In particular, it preferentially uses AI to compute from pre-existing data like previously determined energy cost patterns and real time data (i.e. real time energy cost) the best time for triggering the sending of a request for guided vehicle maintenance operation. By this way, the system according to the invention is capable of decreasing the costs of the maintenance operation.

## Claims

1. System (1) for automatically managing a maintenance operation of an electrical guided vehicle (10), the system comprising an on-board device (11) configured for determining in real time a current energy cost of electrical energy provided to the guided vehicle (10) and automatically determining, in function of said current energy cost, a time T at which a maintenance operation of the guided vehicle (10) has to take place for minimizing an energy cost of said maintenance operation, wherein said determination of the time T is configured for automatically triggering a sending by the on-board device (11) of a request for the maintenance operation of the guided vehicle (10) to a remote control center (12).

2. System (1) according to claim 1, comprising said control center (12), the latter being configured for responding to the request either by a confirmation or by a refusal, wherein in case of a confirmation the control center (12) is configured for automatically sending a time slot to the on-board device for carrying out the maintenance operation.

3. System (1) according to claim 2, wherein the confirmation comprises a movement authority determined by the control center (12) and configured for authorizing a displacement of the guided vehicle until a maintenance area.

4. System (1) according to claim 2 or 3, wherein the control center (12) is configured for determining said time slot in function of the time T.

5. System (1) according to claim 4, wherein the time slot is further determined from at least one of the following parameters:
- a position on a railway network of the guided vehicle (10) comprising the on-board device having sent the request, and/or
- a position of at least another guided vehicle on the railway network, and/or
- a number of guided vehicles currently in operation on the railway network, and/or
- a scheduled operation of the guided vehicle and optionally of any other guided vehicle, and/or
- a distance to a maintenance base.

6. System (1) according to one of the claims 2 to 5, wherein, in order to determine whether the maintenance operation can be approved or refused, the control center (12) determines whether the time slot is free from any conflict with another operation on the railway network, and in the affirmative, the maintenance operation is approved, and in the negative it is refused.

7. System (1) according to one of the claims 1 to 6, wherein the on-board device (11) comprises a scheduling algorithm based on artificial intelligence and using as inputs real time energy costs and pre-existing data for determining an energy cost pattern, and from the latter the time T minimizing the energy costs of the maintenance operation.

8. System (1) according to one of the claims 1 to 7, wherein the pre-existing data comprise previously determined energy cost patterns, and/or previously acquired energy cost values in function of the time.

9. Method for managing a maintenance operation of an electrical guided vehicle (10), the method comprising the steps:
- determining (201) in real time, by means of an on-board device (11) of the guided vehicle (10), a current energy cost of the electrical energy used by, or provided to, the guided vehicle (10) for its operation on a railway network;
- automatically determining (202), by means of said on-board device (11) and in function of said current energy cost, a time T at which a maintenance operation of the guided vehicle has to take place in order to minimize an energy cost of said maintenance operation, wherein said determination of the time T is configured for automatically triggering (203) a sending by the on-board device (11) to a remote control center (12) of a request for the maintenance operation of the guided vehicle;
- receiving (204), by means of a control center (12), the request for the maintenance operation;
- determining (205), by means of said remote control center, whether a time slot for the maintenance operation free of conflict with another operation on the railway network exists;
- sending, by means of the control center (12) to the on-board device (11), either a confirmation or a refusal of the maintenance operation, wherein the confirmation is sent if a free of conflict time slot has been determined, otherwise the refusal is sent.

10. Method according to claim 9, wherein a scheduling algorithm based on artificial intelligence and using as inputs real time energy costs and pre-existing data is used by the on-board device for determining an energy cost pattern, and from the latter the time T minimizing the energy costs of the maintenance operation.

11. Method according to claim 10, wherein the pre-existing data comprise previously determined energy cost patterns, and/or previously acquired energy cost values in function of the time.

12. Method according to one of the claims 9 to 11, wherein the confirmation comprises a movement authority determined by the control center (12) and configured for authorizing a displacement of the guided vehicle until a maintenance area.

13. Method according to one of the claims 9 to 12, wherein the time slot is determined by the remote control center (12) from the time T and from at least one of the following parameters:
- a position on a railway network of the guided vehicle (10) comprising the on-board device having sent the request, and/or
- a position of at least another guided vehicle on the railway network, and/or
- a number of guided vehicles currently in operation on the railway network, and/or
- a scheduled operation of the guided vehicle and optionally of any other guided vehicle, and/or
- a distance to a maintenance base.
